# EUROPÄISCHE PATENTSCHRIFT

(11) **EP 1 541 385 B1**
(45) Veröffentlichungstag und Bekanntmachung des Hinweises auf die Patenterteilung: **09.08.2006**
(21) Anmeldenummer: 04029308.6
(22) Anmeldetag: 10.12.2004
(51) Int. Cl.: B60D 1/06, B60D 1/54

(54) **Anhängerkupplung für Kraftfahrzeuge**
Trailer hitch
Attache remorque

(30) Priorität: 13.12.2003 DE 20319371 U; 27.04.2004 DE 202004006666 U
(43) Veröffentlichungstag der Anmeldung: 15.06.2005
(73) Patentinhaber: Westfalia Automotive GmbH & Co. KG, 33378 Rheda-Wiedenbrück (DE)
(72) Erfinder: Abels, Frank O., 29633 Munster (DE)
(74) Vertreter: Reimold, Otto

(56) Entgegenhaltungen:
- EP-A- 1 153 770
- DE-A1- 10 243 045

## Beschreibung

Die Erfindung betrifft eine Anhängekupplung für Kraftfahrzeuge gemäß Oberbegriff des Anspruchs 1.

Es sind verschiedene Ausführungsformen motorisch angetriebener Anhängekupplungen bekannt, z.B. aus der DE 198 26 618, DE 199 44 264 und DE 100 04 523, bei denen eine senkrecht stehende Kugelstange durch motorischen Antrieb zunächst axial nach unten bewegt wird, so dass die Kugel der Kugelstange unterhalb des Stoßfängers liegt, danach wird die Kugelstange um ca. 90° seitlich verdreht und anschließend motorisch wieder angehoben, bis die Kugelstange sich in der Betriebsstellung befindet. Diese Ausführungsformen haben folgende Nachteile:
- Die Bodenfreiheit reicht (je nach Fahrzeugtyp) gelegentlich nicht aus, besonders wenn das Fahrzeug über einer Bordsteinkante steht
- Die senkrecht angeordnete Kugelstange hat eine Bauform, die bei modernen Fahrzeugen mit besonders niedrig liegender Kofferraumkante nicht in das Fahrzeug integriert werden kann
- Aufwendige Konstruktion - teilweise mit 2 Motoren - um die drei Bewegungsschritte Senken, Schwenken, Heben zu realisieren
- Aufwendige Steuerung der Bewegungsschritte entweder mechanisch oder elektrisch
- Passgenaue und damit teure Führungen erforderlich, die wegen der eingeleiteten Betriebskräfte teure Materialien und Bearbeitungsverfahren notwendig machen.

Es sind weitere Ausführungsformen bekannt, bei denen die Kugelstange an einem fahrzeugfesten Drehlager angeordnet ist und durch einen Motor die Kugelstange aus einer unterhalb des Fahrzeugbodens befindlichen Ruhestellung in die Betriebsstellung geschwenkt wird, wie z.B. in DE 196 54 867 und DE 196 12 959 oder WO 98/57 813 beschrieben. Diese Ausführungsformen haben folgende Nachteile:
- Die Bodenfreiheit reicht bei bestimmten Ausführungsformen und Fahrzeugen ebenfalls nicht aus.
- Bei einigen Fahrzeugformen sind sie wegen der Art des Fahrzeugbodens nur schwer oder gar nicht zu integrieren.
- Die Getriebemotoren sind hohen Belastungen ausgesetzt, wodurch sie aufwendig und teuer werden. Es sind bei bestimmten Ausführungsformen zum Festsetzen der Kugelstange zusätzliche Verriegelungsvorrichtungen erforderlich, die starkem Verschleiß unterliegen und teuer in der Herstellung sind.
- Die Hauptschwenklager unterliegen starken Betriebskräften und müssen daher in aufwendigen und teuren Techniken hergestellt werden.

Es sind schließlich Ausführungsformen bekannt, z.B. EP-A-1 153 770 und DE 101 04 185, bei denen die Kugelstange schwenkbar in einem Lagerblock sitzt, wobei der Lagerblock selber um eine in Fahrzeugrichtung angeordnete Achse schwenken kann, wodurch eine senkende und danach schwenkende Bewegung erzeugt wird. Diese Ausführungsform, die sich zwar sehr gut in Fahrzeuge integrieren lässt, hat dennoch folgende Nachteile:
- Zur Realisierung der Bewegung sind unter Umständen 2 Motoren erforderlich
- Es gibt wiederum drei Bewegungsschritte - Senken - Drehen - Heben - dazu ist eine spezielle Steuerung erforderlich
- Die Herstellung ist wegen zweier großer, die ganz Last aufnehmenden Lager aufwendig und teuer.

Nachdem verschiedene motorisch angetriebene Anhängekupplungen mittlerweile produziert werden, und es sich herausgestellt hat, dass alle bekannten Typen in der Herstellung für den automobilen Massenmarkt zu teuer sind, ist es die Aufgabe der Erfindung, eine motorisch angetriebene Anhängekupplung zu schaffen, die besonders einfach und billig in der Herstellung ist.

Diese Aufgabe wird durch die Merkmale des Patentanspruchs 1 gelöst.

Bei der erfindungsgemäßen Anhängekupplung kommen für das Absenken des Kupplungsarmes keine Drehlager, Verriegelungsvorrichtungen oder andere Bauteile mit hoher Fertigungsgenauheit zur Anwendung. Die bewegenden Teile werden auf einer schiefen Ebene verschoben und ohne Verwendung eines Drehlagers über eine Auflauframpe in die Gebrauchsstellung geschoben und dort durch eine Spindel nach dem Prinzip des Schraubstocks festgeklemmt.

Bisher bekannte schwenkbare Anhängerkupplungen mit mehr als einer Dreh-/Schwenkachse bestehen aus einem in einem Lagerklotz um eine Achse I drehbar gelagerten Kugelarm, wobei der Lagerklotz um eine weitere Achse II schwenkbar gelagert ist; die Achsen I + II stehen dabei im Allgemeinen nahezu senkrecht aufeinander.

Der Sinn dieser Konstruktionen ist es, den Kugelarm, an dessen Ende sich die Kugel zur Ankopplung des Anhängers befindet, aus einer hohen verdeckten Nichtgebrauchsstellung hinter dem Stoßfänger des Fahrzeuges unter dem Stoßfänger hindurch in eine wiederum hohe Gebrauchsstellung zu verschwenken. Dies erfolgt durch drei nacheinander ausgeführte Bewegungen:
Schwenken des Lagerblocks mit dem Kugelarm um die Achse II in eine tiefe Zwischenstellung, Schwenken des Kugelarmes um die Achse I unter dem Stoßfänger hervor (dabei nimmt die Kugel eine tiefe, fahrbahnnahe Position ein) und anschließendes Hochschwenken des Lagerblocks mit Kugelarm um Achse II, wobei die Kugel am Ende dieser Schwenkbewegung eine hohe, fahrbahnferne Position, die Gebrauchsstellung, einnimmt.

Diese Form der schwenkbaren Anhängerkupplung hat einige Nachteile. Für das Schwenken des Lagerblocks und das notwendige Verriegeln der Kugelstange wird viel Platz benötigt, der nicht in allen Fahrzeugen vorhanden ist.

Des Weiteren erfordern schwenkbare Lagerblöcke eine hohes Maß an Fertigungspräzision und kleine Toleranzen, sowohl am Lagerblock selbst als auch am Gehäuse, in dem der Lagerblock schwenkt.

Die vorliegende Erfindung beseitigt diese Nachteile, da hier das Gehäuse aus einer Schweißkonstruktion bestehen und das Pendant zum Lagerblock ein nur wenig bearbeitetes Gussteil sein kann.

Die aus der Zeichnung hervorgehende Anhängerkupplung besteht aus den Komponenten:
- Träger: Er stellte die Verbindung zwischen Anhängerkupplung und Fahrzeug dar.
- Gehäuse: Es ist am Träger befestigt, enthält die beweglichen Teile der Anhängerkupplung und überträgt die Anhängelast von der Kugelstange über den Träger auf das Fahrzeug.
- Kupplungsarm (1) mit Kugel (2): An ihr wird der Anhänger befestigt.
- Gleitklotz (3): In ihm dreht sich der Kupplungsarm (1), er überträgt die Anhängelast von dem Kupplungsarm (1) auf das Gehäuse.
- Verriegelung: Sie sorgt dafür, dass der Gleitklotz (3) und damit der Kupplungsarm (1) in der Gebrauchsstellung fest mit dem Gehäuse verbunden sind.
- Vorschubeinheit (15,16,17): Bewegt den Gleitklotz (3) im Gehäuse und sorgt für die Bewegung des Kupplungsarmes (1) mit Kugel (2) von der Nichtgebrauchs- in die Gebrauchsstellung und zurück.

Das Gehäuse ist eine Schweißkonstruktion und besteht aus einer gewinkelten Bodenplatte (4) mit einem Längsschlitz (24), durch den der Kupplungsarm (1) ragt, einer Rückwand (7) mit einer von oben nach unten verlaufenden Dachkantnut (8), zwei Seitenwänden sowie einer Deckelplatte, welche die Konstruktion nach oben abschließt.

Im Gehäuse bewegt sich der Gleitklotz (3) auf dem Bodenblech quer zur Fahrtrichtung des Fahrzeugs mit Hilfe der Vorschubeinheit (15,16,17). Auf der von einem Antriebsmotor (17) angetriebenen Spindel (16) ist eine Gewindehülse (15) aufgeschraubt, welche verdrehsicher und schwenkbar am Gleitklotz (3) angreift. Dreht sich die Spindel (16), bewegt sich die Gewindehülse (15) in axialer Richtung auf der Spindel (16) und überträgt diese Bewegung auf den Gleitklotz (3).

Die Breite des Gleitklotzes (3) ist geringer als das Maß des Zwischenraumes zwischen den beiden Seitenwänden (27,28) und bewegt sich im Bereich von Toleranzen von Schweißkonstruktionen.

An der Seite des Gleitklotzes (3), die der Rückwand des Gehäuses zugewandt ist, ist eine senkrecht zum Bodenblech verlaufende Dachkantnase (23) angeordnet. Diese Dachkantnase (23) ist asymmetrisch zur Mittellinie des Gleitklotzes angeordnet.

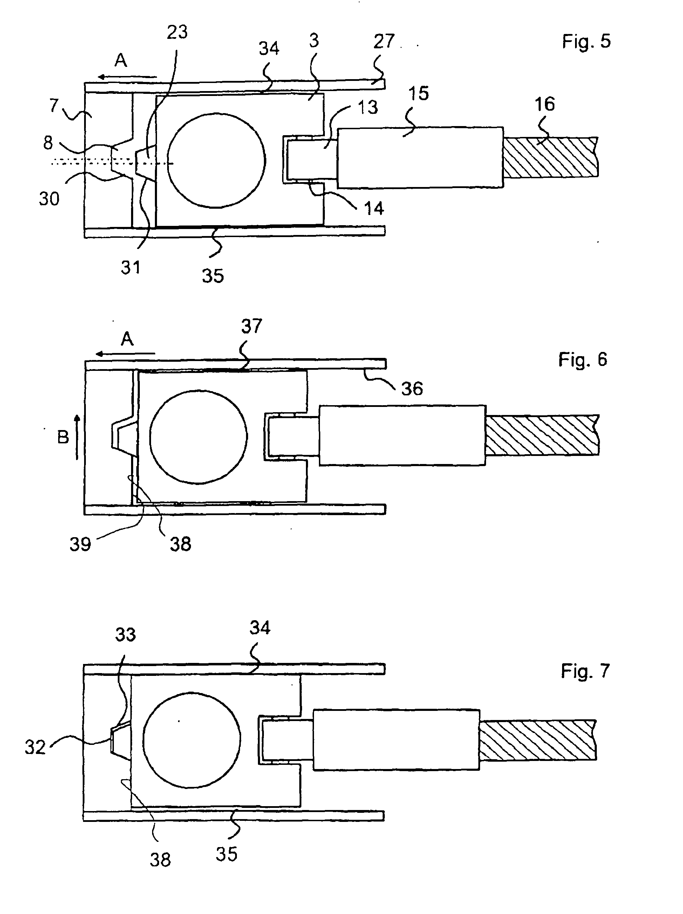

In der Rückwand (7) ist dem Gleitklotz (3) zugewandt asymmetrisch zur Mittellinie der Rückwand eine Dachkantnut (8) angeordnet. Die Funktion der Nuten wird anhand der Fig. 5 bis 7 erläutert.

Der Gleitklotz (3) überstreicht bei seiner Bewegung auf dem Bodenblech (4) auch den Punkt, an dem das Bodenblech (4) nach unten abgewinkelt ist. Vereinfacht gesagt bewegt sich der Gleitklotz sowohl auf einer waagerechten (5) als auch auf einer schiefen Ebene (6). Der Wechsel zwischen diesen beiden Ebenen bewirkt ein Kippen des Gleitklotzes (3) während seiner Bewegung. Dieses Kippen ersetzt das Schwenken des Lagerklotzes (3) bei den bisher bekannten schwenkbaren Anhängerkupplungen.

Der Kupplungsarm (1) ist gekröpft und besitzt an ihrem einen Ende die Kugel (1), an der der Anhänger angreift. Am anderen Ende ist der Kupplungsarm (1) zylinderförmig als Achse (12) ausgebildet.

Der Gleitklotz (3) besitzt eine senkrecht auf das Bodenblech (4) stehende Bohrung (25). In dieser Bohrung (25) ist der Kupplungsarm (1) mit ihrem zylinderförmigen Ende (11) drehbar gelagert. Der Kupplungsarm (1) ragt durch den Längsschlitz (24) im Bodenblech (4). Wird der Gleitklotz (3) bewegt, bewegt sich auch der Kupplungsarm (1) im Längsschlitz (24).

Der Kupplungsarm (1) ragt mit dem zylinderförmigen Ende (11) oben aus dem Gleitklotz (3) heraus. In dieses Ende ist seitlich eine dachkantförmige Nut (26) eingebracht. Die gedachten Verlängerungen der Seitenwände (27,28) der Nut (26) führen durch die Mittelachse (29) des Kupplungsarmes (1).

Die Bewegung der Anhängerkupplung soll an vier Bewegungsabschnitten beschrieben werden.

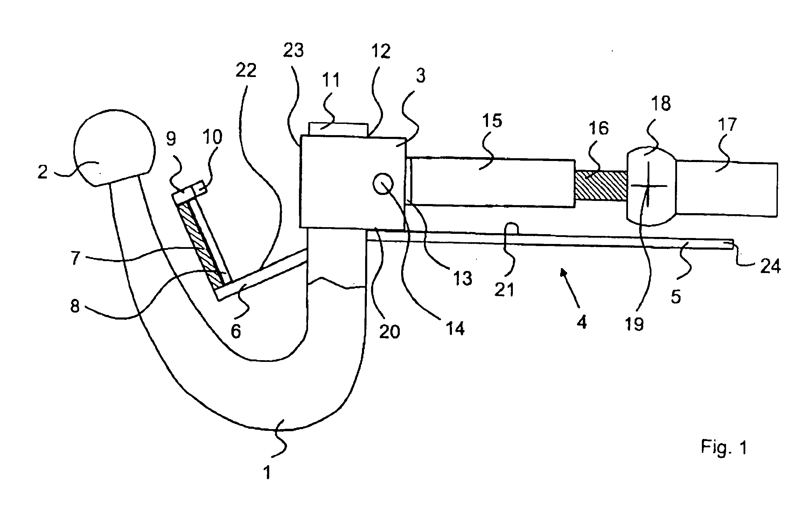

Fig. 1 zeigt die Anhängerkupplung in der Nichtgebrauchsstellung. Die Spindel (16)) ist fast vollständig in die Gewindehülse (15) eingeschraubt, der Gleitklotz (3) mit dem in ihm drehbar im Drehachsglied (12) gelagerten Kupplungsarm (1) ist zurückgezogen und befindet sich auf dem waagerechten Teil (5) der Bodenplatte (4). Der Kupplungsarm (1) mit der Kugel (2) befindet sich in der höchsten quer zur Fahrtrichtung liegenden Position.

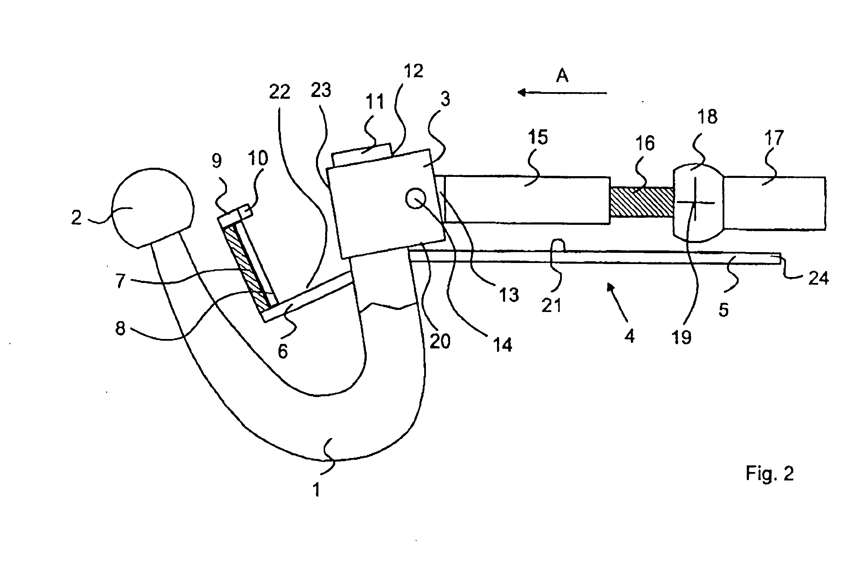

Fig. 2 zeigt den Kupplungsarm (1) mit dem Gleitklotz (3) in der Kippposition der Bewegung an der Stelle, wo der waagerechte Teil (5) der Bodenplatte (4) in den schrägen Teil (6) übergeht. Der Antriebsmotor (17) hat die Spindel (16) derart gedreht, dass sie aus der Gewindehülse (15) herausgefahren ist. Da der Antriebsmotor (17) durch das Schwenklager (18) ortsfest ist, wurde der durch die Drehachse (14) mit dem Lagerauge (13) der Gewindehülse (15) beweglich verbundene Gleitklotz (3) auf der Bodenplatte (4) in Richtung der Rückwand (7) geschoben. Durch das Kippen des Gleitklotzes (3) senkt sich die Kugel (2) in Richtung Erdboden ab, da der Kupplungsarm (1) um die Drehachse (14) schwenkt.

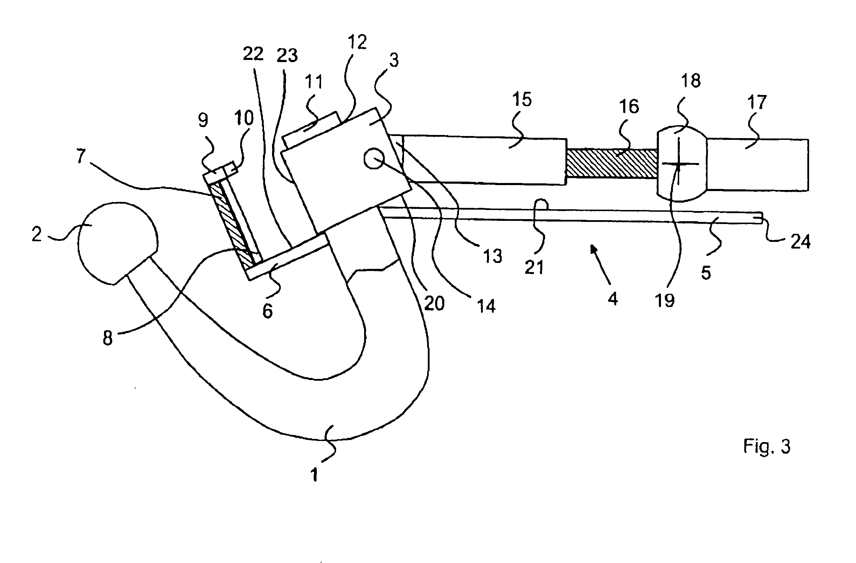

Fig. 3 zeigt den Kupplungsarm (1) mit dem Gleitklotz (3) nach Beendigung des Kippvorganges gemäß Fig. 2. Die Unterseite des Gleitklotzes (3) ist parallel zur Oberfläche des schrägen Teils (6) der Bodenplatte (4) und liegt dort auf. Die Schwenkbewegung des Kupplungsarmes um die Drehachse (14) ist beendet.

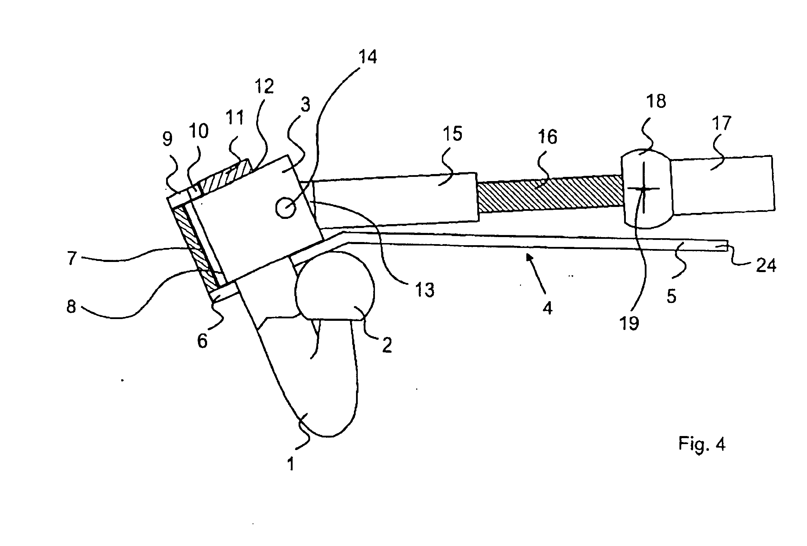

Fig. 4 zeigt den Kupplungsarm (1) mit der Kugel (2) in Gebrauchsstellung. Der Gleitklotz (3) wurde von der Vorschubeinheit (15,16,17) entlang des schrägen Teils (6) gegen die Gehäuserückwand (7) geschoben. Auf eine in nachfolgenden Figuren beschriebene Weise wurde dabei der Kupplungsarm (1) um ca. 90° um das Drehachsglied (12) in eine Richtung gegen die Fahrtrichtung in die Gebrauchsstellung geschwenkt.

Die Dachkantnase (23) am Gleitklotz (3) greift in die asymmetrische Dachkantnut (8) an der Gehäuserückwand (7) ein und verkeilt den Gleitklotz (3) auf eine in nachfolgenden Figuren beschriebene Weise mit dem Gehäuse.

Ebenfalls in nachfolgenden Figuren ist beschrieben, wie die Riegelnase (9) mit dem Dachkant (10) in die Dachkantnut (26) am Kupplungsarmoberteil (11) eingreift und den Kupplungsarm (1) in der Gebrauchsstellung gegen Verdrehen beim Einwirken äußerer Kräfte sichert.

Die Fig. 5 bis 7 zeigen den Gleitklotz (3) zwischen den Seitenwänden (27,28), wie er in der Gebrauchsstellung im Gehäuse verkeilt wird.

In Fig. 5 bewegt die Vorschubeinheit (15,16,17) den Gleitklotz (3) in Pfeilrichtung A auf die Gehäuserückwand (7) zu. Zwischen dem Gleitklotz (3) und den Seitenwänden (27,28) befinden sich die Luftspalte (34,35). Sie ergeben sich aus den Maßungenauheiten der Schweißkonstruktion des Gehäuses und sind für die Funktion erwünscht.

Die Dachkantnut (8) befindet sich nicht mittig in der Gehäuserückwand, sondern ist um einen geringen Betrag in Fahrtrichtung versetzt. Die Dachkantnase (23) befindet sich mittig am Gleitklotz (3).

In Fig. 6 ist der Gleitklotz (3) soweit an die Rückwand (7) heranbewegt worden, dass die Dachkantnase (23) in die Dachkantnut (8) hineinragt und sich die Seitenflächen (30,31) von Dachkantnut und Dachkantnase berühren. Bei der weiteren Bewegung des Gleitklotzes (3) in Pfeilrichtung A wirken die Seitenflächen (30,31) wie ein Keil und bewirken eine überlagerte Bewegung des Gleitklotzes (3) in Pfeilrichtung B.

In Fig. 7 hat der Gleitklotz (3) seine Endposition erreicht, der Kupplungsarm steht in Gebrauchsstellung. Durch die Bewegung in Pfeilrichtung A wurde der Gleitklotz (3) mit seiner Stirnfläche (38) gegen die Stirnfläche der Rückwand (39) gedrückt, durch die Bewegung in Pfeilrichtung B aus Fig. 6, hervorgerufen durch die Keilwirkung der beiden Seitenflächen (30,31) von Dachkantnut (8) und Dachkantnase (23) bei der Bewegung in Pfeilrichtung A, wird der Gleitklotz (3) mit seiner Seitenfläche (37) gegen die Seitenfläche (36) der Seitenwand 1 (27) gedrückt. Dadurch verschwindet der Luftspalt (34), während der Luftspalt (35) maximiert wird.

Durch die nicht-mittige Anordnung der Dachkantnut (8) in der Rückwand (7) berühren sich auch in der Gebrauchsstellung nur die Seitenflächen (30,31) von Dachkantnut (8) und Dachkantnase (23), zwischen den anderen Flächen bleiben die Luftspalte (32,33). Solange die Vorschubeinheit (15,16,17) in Pfeilrichtung A drückt oder in der Gebrauchsstellung verharrt, ist der Gleitklotz (3) im Gehäuse fest verkeilt, alle Lose, die vorher auf Grund der bei Schweißkonstruktionen unvermeidlichen Toleranzen vorhanden ist, ist verschwunden.

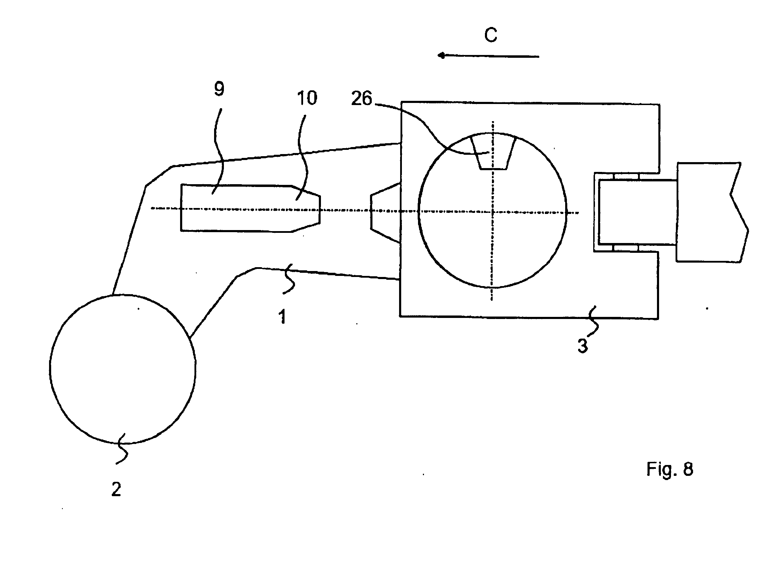

Die Fig. 8 bis 10 zeigen den Gleitklotz (3) und den Kupplungsarm (1) in einer Draufsicht während der Bewegungsabläufe analog zu den Fig. 5 bis 7. Dargestellt wird die Funktion der Sicherung des Kupplungsarmes (1) gegen Verdrehen in der Gebrauchsstellung.

Fig. 8 zeigt in einer Draufsicht den Gleitklotz (3) mit Kupplungsarm (1) in einer Position analog zu Fig. 5. In der Bewegung in Pfeilrichtung C. Der Kupplungsarm (1) befindet sich in einer Position quer zur Fahrtrichtung, die Dachkantnut (26) in dem Kupplungsarmoberteil (11) zeigt in Fahrtrichtung.

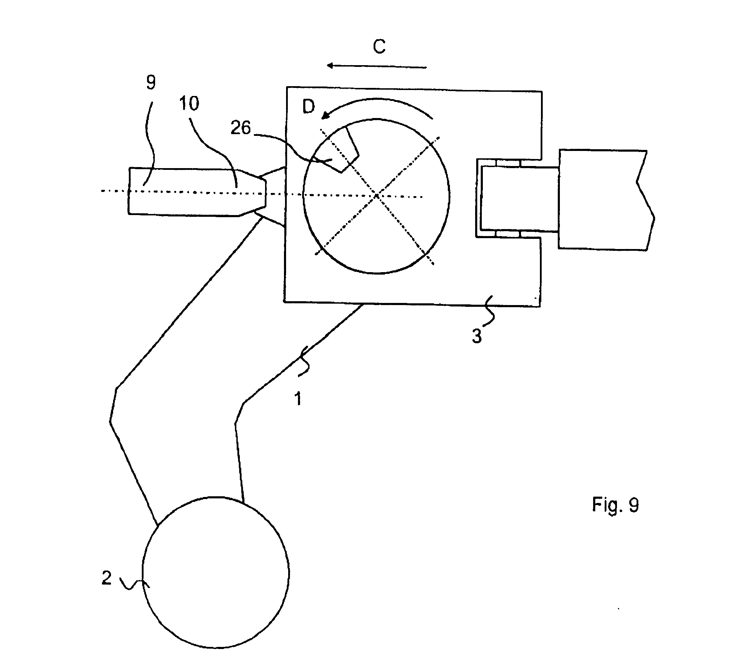

Fig. 9 zeigt in Draufsicht den Gleitklotz (3) mit dem Kupplungsarm (1) in einer Position analog Fig. 6 in der Längsbewegung in Pfeilrichtung C und einer Schwenkbewegung in Pfeilrichtung D, halb ausgeschwenkt. Der Schwenkvorgang wird in nachfolgenden Figuren näher beschrieben. Die Dachkantnut (26) am Kupplungsarmoberteil (11) dreht sich um die Kupplungsarmmittelachse (29) in Pfeilrichtung D in Richtung Riegelnase (9).

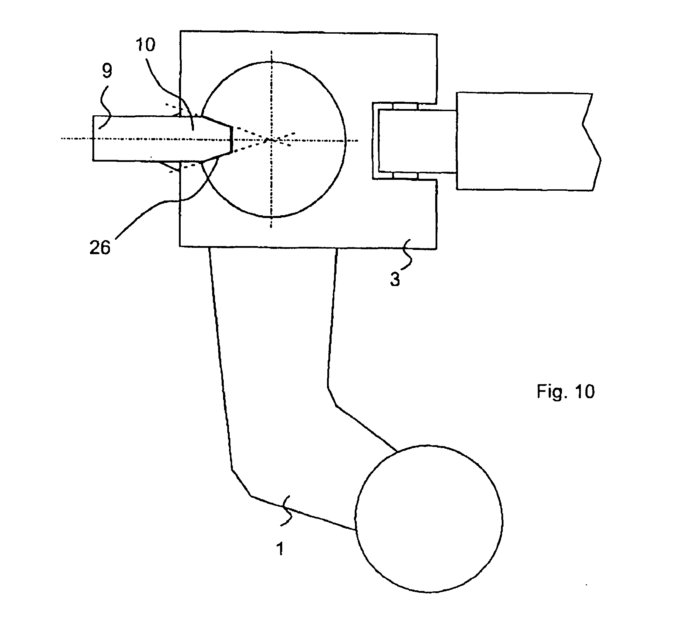

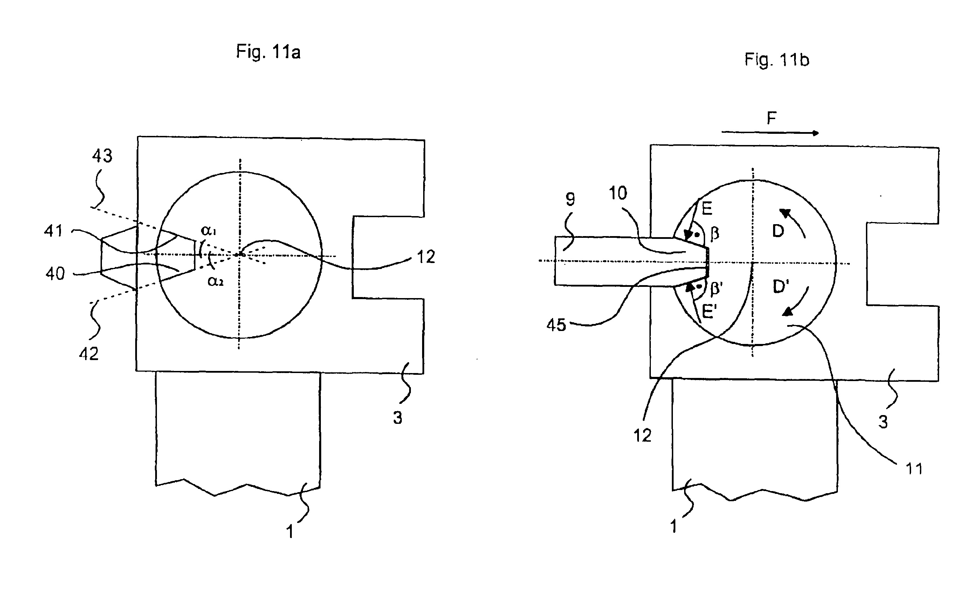

Fig. 10 zeigt in Draufsicht den Gleitklotz (3) mit dem Kupplungsarm (1) in einer Position analog Fig. 7 nach vollendeter Längs- und Schwenkbewegung in der Gebrauchsstellung. Die Riegelnase (9) greift in die Dachkantnut (26) am Kupplungsarmoberteil (11) ein und verhindert ein Wegdrehen des Kupplungsarmes (1) durch Kräfte, die von außen vom Anhänger auf das System eingebracht werden. Dies wird durch eine besondere Konstruktion der von Nase und Nut erreicht und in Fig. 11a,b näher erläutert.

Fig. 11a zeigt den Gleitklotz (3) mit der Dachkantnut (26) am Kupplungsarmoberteil (11) in einer Draufsicht. Die Winkel (a1) und (a2), in welchen die Seitenflächen (40,41) der Dachkantnut (26) zur Mittelachse (44) stehen, ist so gewählt, dass die gedachten Verlängerungen (42,43) der Seitenflächen (40,41) sich im Drehachsglied (12) des Kupplungsarmes (11) schneiden.

Fig. 11b zeigt, dass durch die in Fig. 11a gezeigte Wahl der Winkel (a1) und (a2) die Drehmomentkräfte in Pfeilrichtungen D und D' im rechten Winkel (β) in Pfeilrichtung E und E" auf die Riegelnase (9) einwirken, so dass keine Keilwirkung und damit auch keine Kräfte auftreten, die den Gleitklotz (3) in Pfeilrichtung F bewegen könnten und unzulässige Kräfte auf die Vorschubeinheit (15,16,17} ausüben. Alle auftretenden Drehmomente werden damit von der Riegelnase (9) aufgefangen. Da die Riegelnase (9) nicht ganz in die Dachkantnut (26) eindringt, bleibt ein Luftspalt (45). So ist sichergestellt, dass der Dachkant (10) der Riegelnase (9) immer flächig an den Seitenflächen (40,41) der Dachkantnut (26) anliegt.

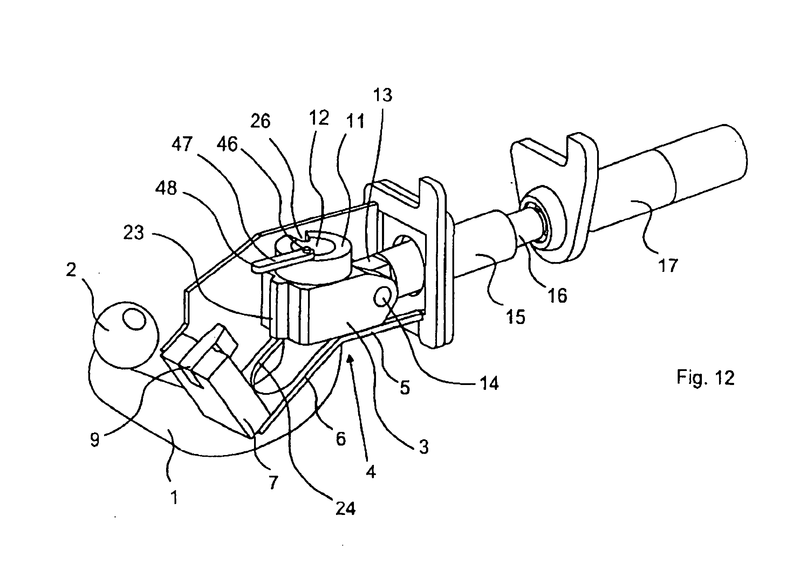

Fig. 12 zeigt die Anhängerkupplung in einer Übersicht ohne hintere Seitenwand (28) und ohne Gehäuseoberteil. Am Kupplungsarmoberteil (11) ist ein Stellhebel (47) mit einem Abstand vom Drehachsglied (12) drehbar um die Drehachse (46) so angeordnet, dass er mit seinem freien Ende zur Gehäuserückwand (7) weist. Der Stellhebel (47) kann in einer geeigneten, hier nicht dargestellten Weise derart geführt sein, dass sein dem Kupplungsarmoberteil (11) abgewandtes Ende, die Stoßfläche (48) stets zur Gehäuserückwand (7) ausgerichtet bleibt.

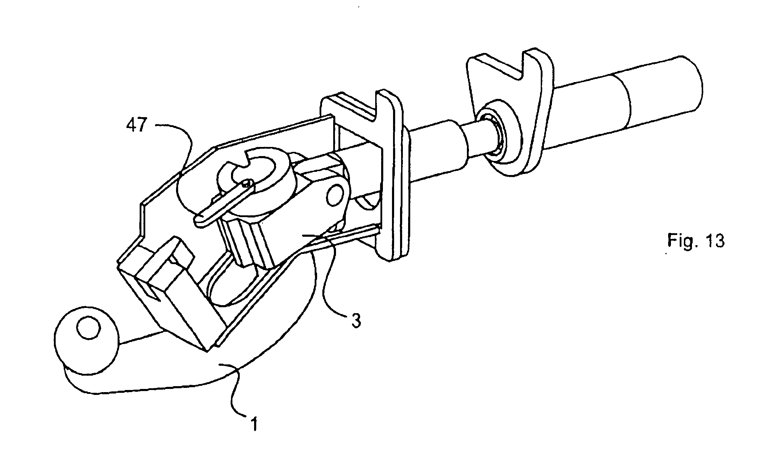

Fig. 13 zeigt den Gleitklotz (3) mit dem Kupplungsarm (1) in der Kippposition analog zu Fig. 2.

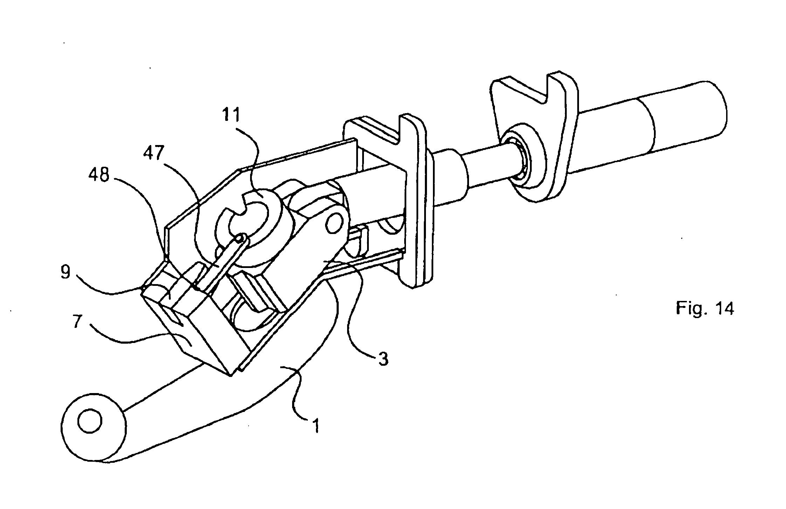

Fig. 14 zeigt den Gleitklotz (3) mit dem Kupplungsarm (1) in einer Position analog zu Fig. 3. Die Stoßfläche (48) des Stellhebels (47) berührt gerade die Rückwand (7). Mit dem Fortschreiten der Längsbewegung des Gleitklotzes (3) beginnt die Drehbewegung des Kupplungsarmes (1), bewirkt durch den Stellhebel (47).

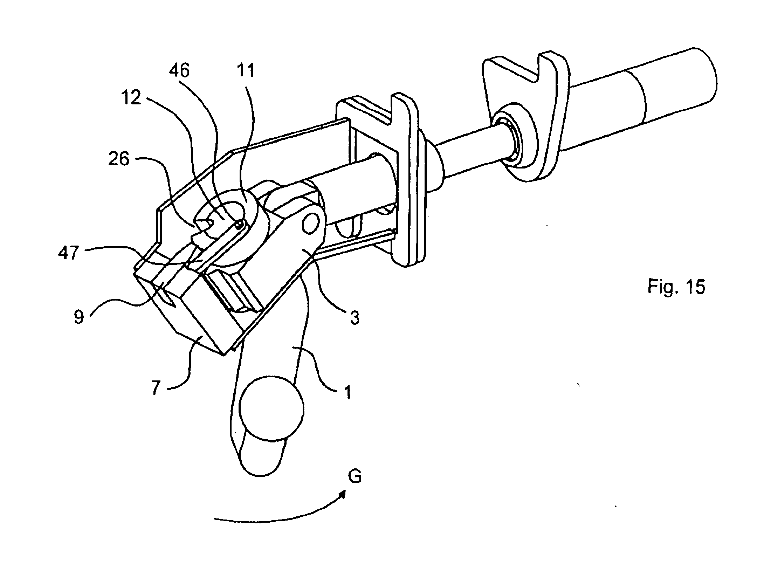

Fig. 15 zeigt den Kupplungsarm (1) nach etwa der Hälfte seiner Drehung in Gebrauchsstellung. Der Abstand von der Drehachse (46) zum Drehachsglied (12) wirkt als Hebel, daher drückt der gegen die Rückwand (7) stoßende Stellhebel (47) den Kupplungsarm (1) in Pfeilrichtung G. Gleichzeitig dreht sich die Dachkantnut (26) im Kupplungsarmoberteil (11) in Richtung Riegelnase (9).

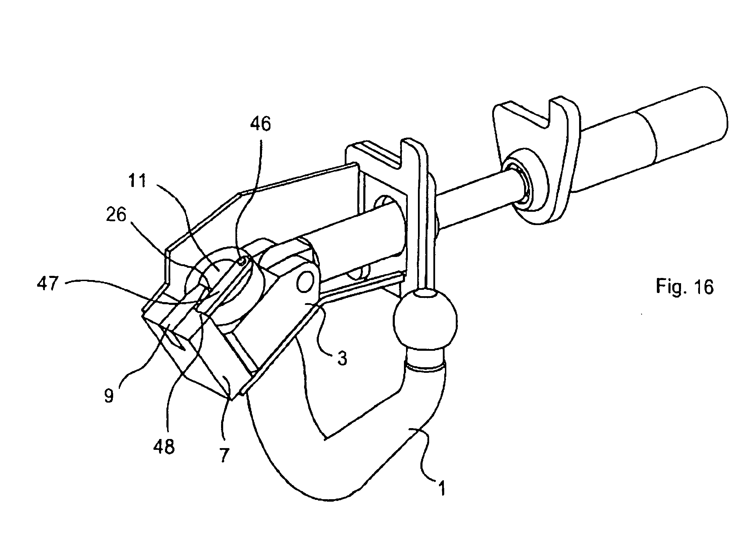

Fig. 16 zeigt den Kupplungsarm (1) in Gebrauchsstellung. Durch die sich überlagernde Vorwärtsbewegung des Gleitklotzes (3) und die Drehung des Kupplungsarmes (1) taucht die Riegelnase (9) in die Dachkantnut (26) ein und sichert den Kupplungsarm (1) (vgl. Fig. 8-10).

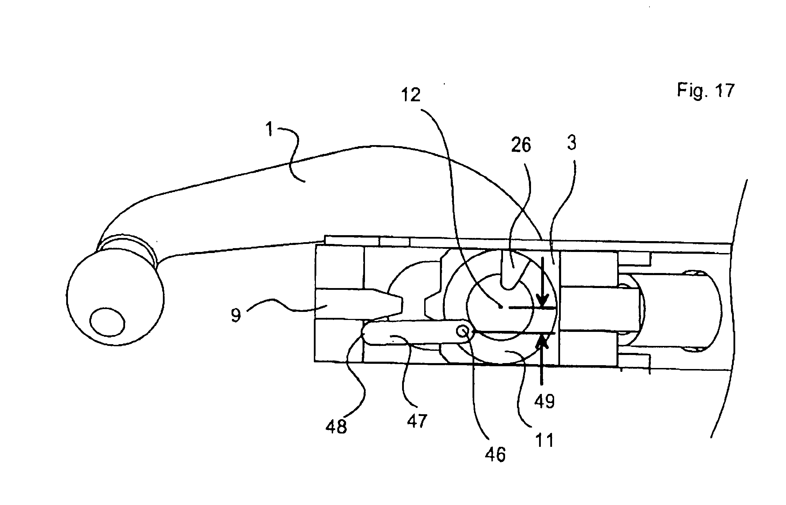

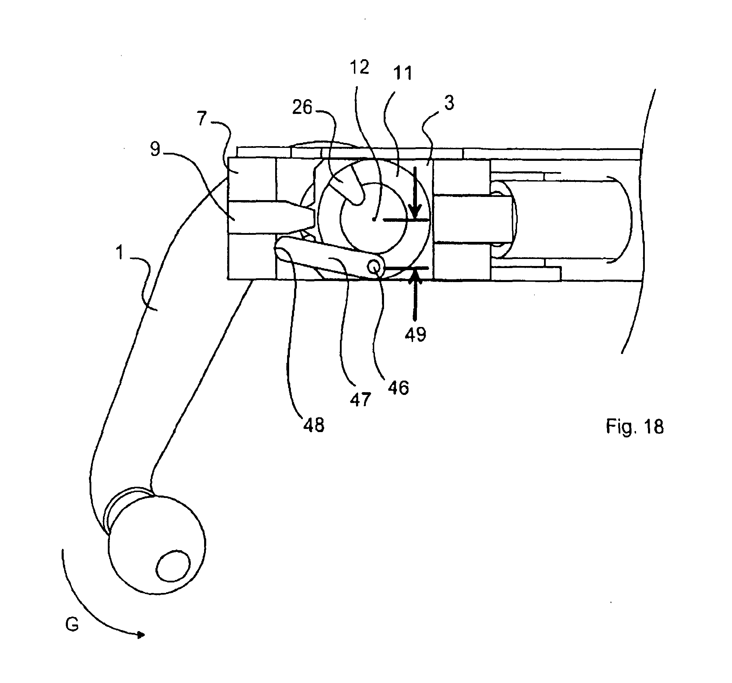

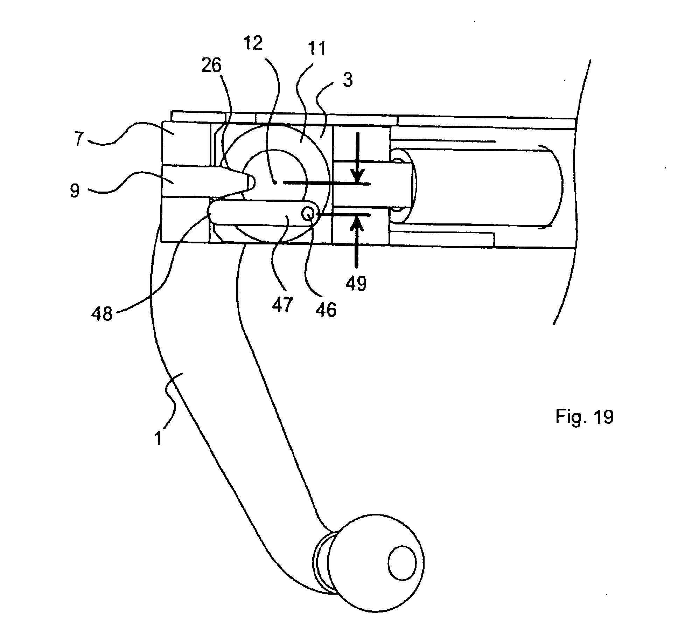

Die Fig. 17 bis 19 zeigen die Bewegung des Gleitklotzes (3) mit dem Kupplungsarm (11) analog zu den Fig. 14 bis 16. Der effektive Hebel (49), mit dem der Stellhebel (47) den Kupplungsarm (1) in Pfeilrichtung G in die Gebrauchsstellung dreht, ändert seine Größe über die Dauer der Drehbewegung.

Bei der Bewegung des Kupplungsarmes (1) aus der Gebrauchsstellung in die Nichtgebrauchsstellung erfolgt die Drehbewegung in umgekehrter Richtung. Dieses Einschwenken des Kupplungsarmes (1) quer zur Fahrtrichtung des Fahrzeuges (vgl.
Fig. 14) erfolgt durch die Schwerkraft, kann aber in einer weiteren Ausführungsform auch durch Federkraft erfolgen.

## Patentansprüche

1. Anhängerkupplung für Kraftfahrzeuge, insbesondere Personenkraftwagen, mit einem Kupplungsarm (1), der einenends ein hochstehend angeordnetes Kopfstück (2) zum lösbaren Befestigen eines Anhängers trägt und andernends mit einem Drehachsglied (12) fest verbunden ist, das in einem um eine Drehachse (14) schwenkbaren Drehlagerteil (Gleitklotz 3) verdrehbar gelagert ist, wobei Mittel zum Verdrehen des Drehachsgliedes (12) und zum Verschwenken des Drehlagerteils (Gleitklotz 3) vorhanden sind, die eine manuell oder kraftbetriebene Vorschubeinrichtung (15, 16, 17) enthalten, sodass der Kupplungsarm (1) durch eine sich aus mehreren Bewegungsabschnitten, die sich auch überlappen können, zusammensetzende Verstellbewegung zwischen einer im am Fahrzeug montierten Zustand nach hinten gerichteten Gebrauchsstellung und einer weiter vorne und höher angeordneten Nichtgebrauchsstellung hin und her verstellbar ist, wobei der Kupplungsarm, ausgehend von der Gebrauchsstellung, in einem der Bewegungsabschnitte durch Verdrehen des Drehachsgliedes (12) im Drehlagerteil (Gleitklotz 3) nach vorne in eine Zwischenstellung verschwenkt und in einem anderen Bewegungsabschnitt durch Verschwenken des Drehlagerteils (Gleitklotz 3) um die Drehachse (14) in einer Querebene in die Nichtgebrauchsstellung gelangt und wobei in der Gebrauchsstellung das Drehlagerteil (Gleitklotz 3) durch die Vorschubeinrichtung (15, 16, 17) kraft- und/oder formschlüssig spielfrei gegen ein fahrzeugfestes Anschlagelement (7) gehalten und der Kupplungsarm (1) verdrehgeschützt mit einem fahrzeugfesten Teil (Riegelnase 9) gekoppelt ist, **dadurch gekennzeichnet, dass** das Drehlagerteil von einem Gleitklotz (3) gebildet wird, der über die Drehachse (14) mit der Vorschubeinrichtung (15, 16, 17) verbunden und auf einer in der Querebene verlaufenden Fläche (4) verschiebbar ist, die aus mindestens zwei im unterschiedlichen Winkel zur Horizontalen stehenden Teilflächen (5, 6) besteht, wobei der Gleitklotz (3) in der Gebrauchsstellung am unteren Ende der stärker geneigten Teilfläche (6) angeordnet ist und beim Bewegen nach oben über die Übergangsstelle zwischen den Teilflächen (5, 6) in die Nichtgebrauchsstellung kippt.

2. Anhängerkupplung nach Anspruch 1, **dadurch gekennzeichnet, dass** am Gleitklotz (3) und am fahrzeugfesten Anschlagelement (7) korrespondierende Keilflächen (30, 31) angeordnet sind, welche den Gleitklotz (3) in der Gebrauchsstellung zwischen dem fahrzeugfesten Anschlagelement (7) und einer der Seitenwände (27, 28) des Kupplungsgehäuses kraft- und/oder formschlüssig sowie spielfrei festsetzt.

3. Anhängerkupplung nach Anspruch 1 oder 2, **dadurch gekennzeichnet, dass** bei der Bewegung des Gleitklotzes (3) in die Gebrauchsstellung der im Gleitklotz (3) mit dem Drehachsglied (12) drehbar gelagerte Kupplungsarm (1) aus seiner Nichtgebrauchsstellung in die Gebrauchsstellung schwenkt.

4. Anhängerkupplung nach einem der Ansprüche 1 bis 3, **dadurch gekennzeichnet, dass** der Kupplungsarm (1) in seiner Gebrauchsstellung mit dem fahrzeugfesten Teil der Anhängerkupplung durch ein Blockierglied (9) drehfest verbunden ist.

5. Anhängerkupplung nach einem der Ansprüche 1 bis 3, **dadurch gekennzeichnet, dass** der Kupplungsarm (1) in seiner Gebrauchsstellung mit dem Gleitklotz (3) drehfest verbunden ist.

6. Anhängerkupplung nach Anspruch 4 oder 5, **dadurch gekennzeichnet, dass** vom Kupplungsarm (1) in der Gebrauchsstellung keine Drehmomente auf die Vorschubeinrichtung übertragen werden.

## Claims

1. Trailer coupling for motor vehicles, in particular cars, with a coupling arm (1) carrying at one end an upright head section (2) for the releasable fastening of a trailer, and rigidly connected at the other end to a hinge element (12) mounted rotatably in a rotary bearing part (slide block 3) capable of swivelling around a rotation axis (14), wherein are provided means for the rotation of the hinge element (12) and for the swivelling of the rotary bearing part (slide block 3), said means containing a manual or powered feed mechanism (15, 16, 17), so that the coupling arm (1) may be adjusted to and fro by means of an adjustment movement comprised of several movement sections, which may also overlap, between a position of use mounted on the vehicle and facing towards the rear, and an inoperative position in which it is positioned further forward and higher, wherein the coupling arm, starting from the position of use, is swivelled in one of the movement sections, through rotation of the hinge element (12) in the rotary bearing part (slide block 3), forward into an intermediate position, and in another movement section comes into the inoperative position through swivelling of the rotary bearing part (slide block 3) around the rotation axis (14), and wherein in the position of use the rotary bearing part (slide block 3) is held by the feed mechanism (15, 16, 17) force-closed and/or positively and without play against a stop element (7) fixed to the vehicle, and the coupling arm (1) is coupled non-rotatably to a part (locking lug 9) fixed to the vehicle, **characterised in that** the rotary bearing part is formed by a slide block (3) which is connected via the rotation axis (14) to the feed mechanism (15, 16, 17) and may slide on a surface (4) running in the lateral plane and comprised of at least two partial surfaces (5, 6) standing at different angles to the horizontal, wherein the slide block (3) in the position of use is located at the lower end of the more sharply inclined partial surface (6), and tilts into the inoperative position when moved upwards over the transition point between the partial surfaces (5, 6).

2. Trailer coupling according to claim 1 **characterised in that** there are provided, on the slide block (3) and on the stop element (7) fixed to the vehicle, corresponding wedge surfaces (30, 31) which fix the slide block (3) in the position of use, force-closed and/or positively and without play, between the stop element (7) fixed to the vehicle and one of the side walls (27, 28) of the coupling housing.

3. Trailer coupling according to claim 1 or 2, **characterised in that**, during movement of the slide block (3) into the position of use, the coupling arm (1) mounted rotatably in the slide block (3) with the hinge element (12) swivels from its inoperative position into the position of use.

4. Trailer coupling according to any of claims 1 to 3, **characterised in that** the coupling arm (1) in its position of use is connected non-rotatably by a locking lug (9) to the part of the trailer coupling fixed to the vehicle.

5. Trailer coupling according to any of claims 1 to 3, **characterised in that** the coupling arm (1) in its position of use is connected non-rotatably to the slide block (3).

6. Trailer coupling according to claim 4 or 5, **characterised in that** in the position of use no torques are transmitted from the coupling arm (1) to the feed mechanism.

## Revendications

1. Attelage de remorque pour véhicules automobiles, en particulier pour voitures de tourisme, comportant un bras d'attelage (1) qui porte à une extrémité une pièce de tête (2) disposée verticalement pour la fixation amovible d'une remorque et est solidaire à l'autre extrémité d'un élément d'axe de rotation (12) qui est monté de manière à pouvoir tourner dans une partie de palier de rotation (bloc coulissant 3) qui peut pivoter autour d'un axe de rotation (14), des moyens étant prévus pour la rotation de l'élément d'axe de rotation (12) et pour le pivotement de la partie de palier de rotation (bloc coulissant 3), lesquels contiennent un dispositif d'avance (15, 16, 17) fonctionnant manuellement ou de manière mécanique, de telle sorte que le bras d'attelage (1) est déplaçable en sens alternés par un mouvement de déplacement se composant de plusieurs segments de déplacement qui peuvent aussi se superposer, entre une position d'utilisation dirigée vers l'arrière à l'état monté sur le véhicule, et une position de non-utilisation disposée plus loin à l'avant et plus haut, le bras d'attelage, partant de la position d'utilisation, pivotant, dans l'un des segments de déplacement, par rotation de l'élément d'axe de rotation (12) dans la partie de palier de rotation (bloc coulissant 3) vers l'avant, dans une position intermédiaire, et parvenant, dans un autre segment de déplacement, par pivotement de la partie de palier de rotation (bloc coulissant 3) autour de l'axe de rotation (14) dans un plan transversal, dans la position de non-utilisation, et dans la position d'utilisation la partie de palier de rotation (bloc coulissant 3) étant maintenue, par le dispositif d'avance (15, 16, 17), à force et/ou par complémentarité de formes, sans jeu contre un élément de butée (7) solidaire du véhicule, et le bras d'attelage (1) étant couplé, de manière bloquée en rotation par une pièce solidaire du véhicule (ergot de verrouillage 9), **caractérisé en ce que** la partie de palier de rotation est formée par un bloc coulissant (3) qui est relié, par l'axe de rotation (14), au dispositif d'avance (15, 16, 17) et peut coulisser sur une surface (4) s'étendant dans le plan transversal, laquelle surface est constituée d'au moins deux surfaces partielles (5, 6) formant des angles différents par rapport à l'horizontale, le bloc coulissant (3) en position d'utilisation étant disposé sur l'extrémité inférieure de la surface partielle (6) plus fortement inclinée, et ce bloc basculant dans la position de non-utilisation lors du déplacement vers le haut, sur le point de transition entre les surfaces partielles (5, 6).

2. Attelage de remorque selon la revendication 1, **caractérisé en ce que** sur le bloc coulissant (3) et sur l'élément de butée (7) solidaire du véhicule sont disposées des surfaces coniques (30, 31) correspondantes qui fixent à force et/ou par complémentarité de formes ainsi que sans jeu le bloc coulissant (3) dans la position d'utilisation entre l'élément de butée (7) solidaire du véhicule et l'une des parois latérales (27, 28) du boîtier d'attelage.

3. Attelage de remorque selon la revendication 1 ou 2, **caractérisé en ce que** lors du déplacement du bloc coulissant (3) dans la position d'utilisation, le bras d'attelage (1), monté tournant dans le bloc coulissant (3) avec l'élément d'axe de rotation (12), pivote depuis sa position de non-utilisation dans la position d'utilisation.

4. Attelage de remorque selon l'une des revendications 1 à 3,
**caractérisé en ce que** le bras d'attelage (1) dans sa position d'utilisation est relié solidairement en rotation par un élément de blocage (9) à la partie solidaire du véhicule de l'attelage de remorque.

5. Attelage de remorque selon l'une des revendications 1 à 3,
**caractérisé en ce que** le bras d'attelage (1) dans sa position d'utilisation est relié solidairement en rotation au bloc coulissant (3).

6. Attelage de remorque selon la revendication 4 ou 5, **caractérisé en ce qu'**aucun couple de rotation n'est transmis au dispositif d'avance par le bras d'attelage (1) dans la position d'utilisation.
